# EUROPÄISCHE PATENTSCHRIFT

(11) **EP 2 222 069 B1**
(45) Veröffentlichungstag und Bekanntmachung des Hinweises auf die Patenterteilung: **18.04.2018**
(21) Anmeldenummer: 09014259.7
(22) Anmeldetag: 14.11.2009
(51) Int. Cl.: H04M 11/02, H04M 1/02, H04N 7/18

(54) **Verfahren zur Inbetriebnahme oder Einrichtung eines Türkommunikationssystems**
Method for operating or setting up a door communication system
Procédé de mise en marche ou d'installation d'un système de communication de porte

(30) Priorität: 20.02.2009 DE 102009009857; 02.05.2009 DE 102009019736
(43) Veröffentlichungstag der Anmeldung: 25.08.2010
(73) Patentinhaber: ABB AG, 68309 Mannheim (DE)
(72) Erfinder: Lehnert, Christian, 58239 Schwerte (DE)

(56) Entgegenhaltungen:
- WO-A2-2008/096238
- DE-A1- 10 053 367
- DE-A1- 19 731 149
- JP-A- 2006 086 606
- US-A1- 2003 095 185
- US-A1- 2006 251 229
- VIKING ELECTRONICS: "AES-2000 Accessible Entry System" , [Online] Seiten 1-8, XP002503494 Gefunden im Internet: URL:http://www.telcom-data.com/brochures/a es-2000.pdf> [gefunden am 2008-11-10]

## Beschreibung

Die Erfindung betrifft ein Verfahren zur Inbetriebnahme eines Türkommunikationssystems (Türsprechanlage), welches mehrere Türkommunikationskomponenten, wie Türstation und Wohnungsstationen respektive Bedienelemente einer Türstation oder Wohnungsstation, wie Ruf- oder Türöffner-Tasten aufweist, die über ein Netzwerk / Bussystem miteinander verbunden sind.

Bei der Inbetriebnahme oder Einrichtung, d. h. Programmierung der Konfiguration eines Türkommunikationssystems und auch bei späteren Wartungen ist ein kostensparendes Konzept der einfachen Programmierung des Türkommunikationssystems durch lediglich eine Person, beispielsweise den Monteur/Installateur, erwünscht - ein sogenanntes "Ein-Mann-Inbetriebnahme-Verfahren". Dazu ist das Türkommunikationssystem zunächst in den Programmiermodus zu versetzen. Eine erste Möglichkeit besteht darin, zuerst die (Ruf-) Tasten an der Türstation nacheinander zwecks Identifikation zu betätigen und anschließend die (Licht-, Türöffner-, Sprach-) Tasten an den Wohnungsstationen (Wohntelefon) in gleicher Reihenfolge zwecks Zuordnung und Speicherung zu betätigen. Eine zweite, alternative Möglichkeit besteht darin, zuerst eine (Einstell-) Taste an einer Wohnungsstation zwecks Identifikation zu betätigen und anschließend die (Ruf-) Taste an der Türstation zwecks Zuordnung und Speicherung zu betätigen. Sind alle gewünschten Zuordnungen erfolgt, wird die Programmierung des Türkommunikationssystems beendet. Die Anwesenheit aller Wohnungsparteien zum Zeitpunkt der Programmierung ist nicht erforderlich. Bei Abwesenheit einer Wohnungspartei wird die Zuordnung anstatt über die Wohnungsstation alternativ über einen Etagendrücker (Etagenruftaste, Etagenstation) vorgenommen.

Derartige Inbetriebnahme-Verfahren haben folgende Nachteile:
- Die Konfiguration der Zuordnung einer (Ruf-) Taste der Türstation zu einer Wohnungsstation (Programmierung des Türkommunikationssystems) unterliegt einem fest vorgegebenen, sequenziellen Ablauf.
- Konfigurationsänderungen der Zuordnung bedürfen der erneuten Identifikation von (Ruf-) Taste der Türstation und/oder der Wohnungsstation.
- Konfigurationseinstellungen und Konfigurationsänderungen, die über eine Zuordnung einer (Ruf-) Taste der Türstation zu einer Wohnungsstation hinausgehen, greifen nicht mehr auf zuvor vorgenommene Identifikationen von Türstation und/oder Wohnungsstation (Komponenten) zurück.
- Eine eindeutige, individuelle und leicht verständliche Identifikation der Türkommunikationskomponenten, wie beispielsweise der (Ruf-) Tasten der Türstation oder der Wohnungsstation durch Ton, Bild oder Audio/Video bei der Erstinbetriebnahme oder Konfigurationsänderungen ist nicht möglich. Akustische oder visuelle Signale dienen lediglich der Quittierung der Programmierung.
- Eine temporäre oder permanente Vorkonfiguration (Identifizierung) von Türkommunikationskomponenten wird nicht unterstützt.

Aus der WO 2008/096238 A2 ist eine Wechselsprech- und/oder Video-Türstation mit Tastatur / Druckknöpfen und Anzeigefeld bekannt, welche Audio- und/oder Video-Informationen erfassen kann, wodurch eine Kommunikation mit einer oder mehreren Wohnungsstation(en) und eine Überwachung des Haus-Außenbereiches ermöglicht wird, wobei eine Zweidrahtverbindung über einen Bus eingesetzt wird. Mittels eines Computers erfolgt die Eingabe, Löschung und Modifikation von Informationen / Konfigurationen / Parametern. Das Anzeigefeld der Türstation kann z. B. zur Anzeige von Öffnungszeiten, Anwesenheit/Abwesenheit, Benutzer-Mitteilungen usw. dienen.

Aus Viking Electronics: "AES-2000 Accessible Entry System" XP-002503494, Seiten 1 - 8, ist ein Apartment-Zutrittssystem mit Audio- und visueller Assistenz bekannt, wobei ein Display eine Liste aller Hausbewohner sowie Anweisungen anzeigt und ein Sprachaufnahmegerät unterstützende Sprachsignale liefert. Es ist eine Zweiwege-Kommunikation möglich, des Weiteren kann der Bewohner den Türöffner betätigen. Jedem Bewohner ist eine nicht änderbare ID-Nummer zugeordnet. Während der Programmierung wird eine Audio-Aufnahme des Namens eines jeden Bewohners angefertigt. Diese Audio-Aufnahmen hört der Anwender, wenn er Schritt für Schritt durch das Verzeichnis aller Bewohner geht, um den zu besuchenden Bewohner aus der Liste aller Hausbewohner zu finden.

Aus der DE 100 53 367 A1 ist ein Schild für die Darstellung einer visuell erfassbaren und elektronisch veränderbaren Information bekannt, insbesondere Namensschild für die Anordnung bei einer Tür. Eine darzustellende Information wird über eine Tastatur eingegeben, mittels eines Mikrokontroller-Programms serialisiert, in einen hochfrequenten Signalzug umgewandelt und zu einer Empfangseinrichtung übertragen, wo der hochfrequente Signalzug demoduliert wird. Unter Einsatz eines zweiten Mikrocontrollers und eines Bildspeichers wird eine auf einem Display anzuzeigende information gewonnen.

Aus der DE 197 31 149 A1 ist ein Anzeigefeld an einer Türstation für Türsprech- und Klingelanlagen bekannt, wobei die Anzahl der Klingeltasten softwaremäßig programmiert ist und die Software einen Mikrocontroller ansteuert. Das Klingelsignal wird von einem Touchscreen, an dem der Tastendruck abgenommen wird, erzeugt und dem Mikrocontroller zugeführt. Das Anzeigefeld kann ohne Austausch von Bauteilen und ohne Umklemmen von Anschlüssen beliebig verändert werden. Die Signaleingabe wird ohne zusätzliche Klingeltasten oder sonstige Tastaturen ermöglicht.

Der Erfindung liegt die Aufgabe zugrunde, ein optimiertes Verfahren zur Inbetriebnahme eines Türkommunikationssystems anzugeben.

Diese Aufgabe wird in Verbindung mit den Merkmalen des Oberbegriffes des Anspruchs 1 erfindungsgemäß dadurch gelöst, dass zur Identifikation einer bestimmten Türkommunikationskomponente oder eines bestimmten Bedienelements dieser Komponente oder diesem Bedienelement eine bestimmte Audio-Datei und/oder Video-Datei und/oder Audio/Video-Datei zugeordnet wird und dass diese bestimmte Audio-Datei und/oder video-Datei und/oder Audio/Video-Datei abgespeichert wird.

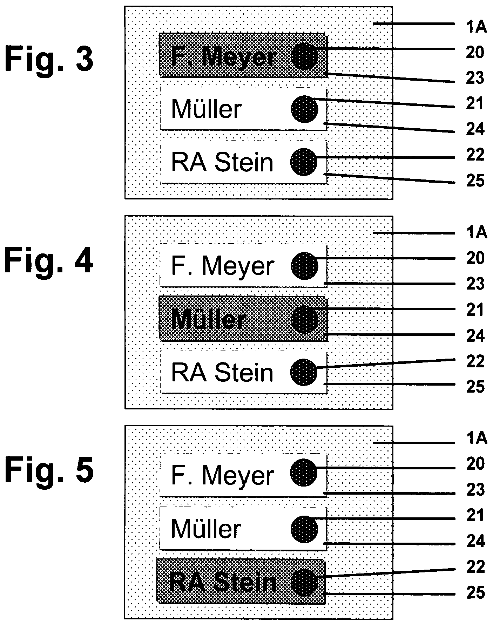

- Fig. 3, 4, 5: unterschiedliche Video-Dateien zur Identifikation unterschiedlicher Ruf-Tasten einer Türstation.

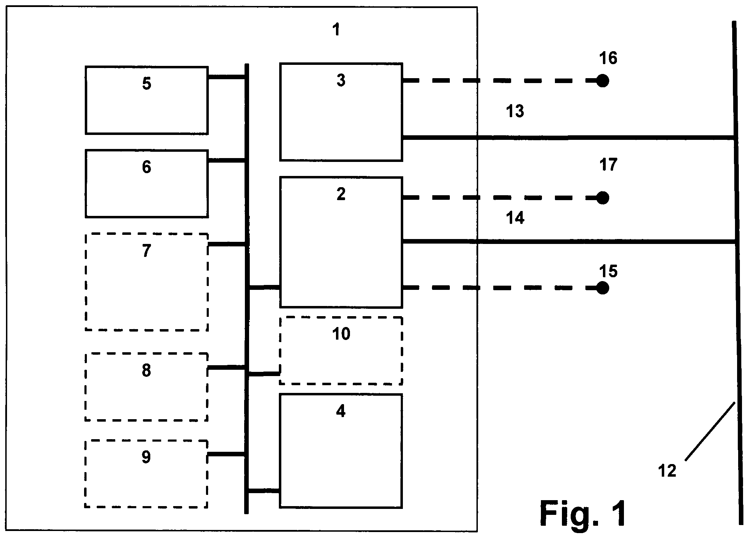

In Fig. 1 ist eine Türkommunikationskomponente eines Türkommunikationssystems dargestellt. Eine Türkommunikationskomponente 1 weist dabei folgende Teilkomponenten auf:
- ein Netzteil 3 für die geräteinterne Spannungsversorgung, wobei dieses Netzteil 3 entweder über eine Spannungsversorgungsleitung 13 mit einem Netzwerk/Bussystem 12 verbunden ist, beispielweise PoE - Power over Ethernet, KNX - Konnex Twisted Pair Bus oder alternativ über eine Spannungsversorgungsleitung 16 an einen externen Spannungsanschluss, beispielsweise ein 230V Netz oder ein Kleinspannungsnetz, angeschlossen ist,
- einen Lautsprecher 5 für die Tonwiedergabe,
- ein Mikrofon 6 für die Tonerfassung und -wandlung zur internen analogen und/oder digitalen Weiterverarbeitung,
- optional ein oder mehrere Bedienelement(e) 7, beispielsweise Tasten/Schalter/Sensoren für Rufsignal, Sprachannahme, Türöffner, Licht-Ein/Ausschaltung, Code-Eingabe oder verborgene Einstellungen/Codierungen oder für biometrische oder RFID-Erkennung, Näherungssensor, Touch-Display, usw.
- optional eine oder mehrere Kamera(s) 8 für Bilderfassung und -wandlung zur internen analogen und/oder digitalen Weiterverarbeitung,
- optional ein oder mehrere (Touch-) Display(s) 9 für die Visualisierung von Bildern, Videos und/oder für die Menüsteuerung,
- eine Steuerlogik/Busanbindung 2 für die interne Funktionsverarbeitung und die Kommunikation über externe Anschlüsse,
- einen Speicher 4 für die permanente und/oder temporäre Speicherung von Daten, insbesondere Audio-Dateien und/oder Video-Dateien und/oder Audio/Video-Dateien, oder als Referenzierung auf externe Speicherkomponenten respektive Verweis auf Dateien in einer externen Zentralkomponente/Zentralstation,
- optional eine Sprach-/Bild-/Näherungserkennung 10 für die Auswertung von Audio-Daten und/oder visuellen Daten.

Die Steuerlogik/Busanbindung 2 ist ausgangsseitig über eine analoge und/oder digitale Steuer- und Datenübertragung 14 an das Netzwerk / Bussystem 12 angeschlossen. Alternativ hierzu ist eine Drahtlosverbindung 17 mit Sende- und Empfangseinheit zwischen Steuerlogik/Busanbindung 2 und Netzwerk / Bussystem 12 vorgesehen.

Die Steuerlogik/Busanbindung 2 kann optional einen Datenmediumanschluss 15, beispielsweise zur Einführung einer Speicherkarte mit mindestens einer Audio-Datei und/oder mindestens einer Video-Datei und/oder mindestens einer Audio/Video-Datei aufweisen.

Die vorstehend erläuterte Türkommunikationskomponente 1 kann als
- Türstation oder
- Wohnungsstation oder
- Zentralstation/Zentralkomponente oder
- Etagenstation
eingesetzt werden.

Die Etagenstation kann im einfachsten Fall in Form einer Etagenruftaste mit der Teilkomponente Bedienelement 7 - eine (Ruf-) Taste - und externer Anbindung an das Netzwerk / Bussystem 12 als Tastkontakt ausgebildet sein. Bei dieser Ausführungsform können jedoch keine eigenständigen akustischen und/oder visuellen Identifizierung vorgenommen werden, nicht von außen, über den Datenmediumanschluss 15 zugeführt werden und nicht selbst beispielsweise durch den Hersteller oder durch den Monteur/Installateur selbst gespeichert werden oder als Verweis auf ein Zentralsystem hinterlegt werden. Die Einbindung in das Türkommunikationssystem findet dann entweder als Hilfskontakt der Türstation oder der Wohnungsstation statt und wird nachfolgend nicht weiter betrachtet. Sofern jedoch eine Steuerlogik/Busanbindung 2 im Zusammenhang mit einem Speicher 4 vorhanden ist, ist das nachfolgend beschriebene Verfahren anwendbar.

Der Zentralstation/Zentralkomponente kann (muss aber nicht) eine besondere Bedeutung zukommen. Sie kann zentrale Aufgaben übernehmen, die auf anderen Türkommunikationskomponenten 1 nicht zur Verfügung stehen, beispielsweise Sprach- und/oder Bilderkennung für all diejenigen Türkommunikationskomponenten 1, die über keine solche Teilkomponente verfügen oder als Gateway zu anderen Netzwerken / Bussystemen. Sie kann Teil einer Türstation oder Wohnungsstation oder eine eigenständige Türkommunikationskomponente 1 sein. Sonderfälle sind Zentralstationen ohne Lautsprecher und Mikrofon. Selbstverständlich sind auch Türkommunikationssysteme realisierbar, welche keine Zentralstation/Zentralkomponente aufweisen.

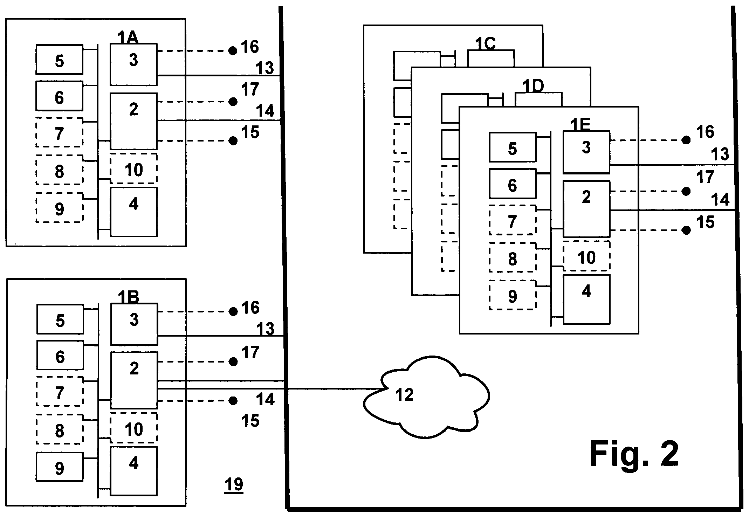

Das vom Einfamilienhaus bis zum Mehrparteienhaus einsetzbare Verfahren zur Inbetriebnahme eines Türkommunikationssystems wird im Folgenden beispielhaft anhand eines Wohnhauses mit drei Wohnungsparteien beschrieben. In Fig. 2 ist ein solches aus mehreren Türkommunikationskomponenten aufgebautes Türkommunikationssystem schematisch dargestellt. Das gezeigte Türkommunikationssystem 19 besteht beispielhaft aus den folgenden Türkommunikationskomponenten 1
- einer Türstation 1A mit mindestens drei (Ruf-) Tasten (diese stellen Bedienelemente 7 dar), Mikrofon 6 und Lautsprecher 5,
- drei Wohnungsstationen (Wohntelefone) 1C, 1D, 1E mit je mindestens einer (Ruf-, Licht-, Türöffner-, Sprach-) Taste (diese stellt ein Bedienelement 7 dar), Mikrofon 6 und Lautsprecher 5,
- einer Zentralstation 1B,
- gegebenenfalls einer oder mehreren Etagenstationen je Wohnungseinheit.

Die einzelnen Türkommunikationskomponenten 1 respektive 1A, 1B, 1C, 1D, 1E sind über ein beliebiges Netzwerk / Bussystem 12 (physikalisch: 2-Draht, Ethernet, Funk; Protokoll: analog, proprietär, IP, KNX, usw.) miteinander verbunden.

Eine Erstinbetriebnahme von Türkommunikationskomponenten 1 kann auf zwei Arten erfolgen:
A) Entweder mittels Vorkonfiguration/Voridentifikation der Türkommunikationskomponenten 1, wenn sich die Türkommunikationskomponenten 1 entweder noch nicht im Türkommunikationssystem 19 befinden oder im Türkommunikationssystem 19 isoliert voneinander verdrahtet sind,
B) oder mittels Systemidentifikation/Systemprogrammierung, wenn sich die Türkommunikationskomponenten 1 im Türkommunikationssystem 19 oder einem Teilsystem hiervon befinden.

Dabei ist folgende Alternative einer Vorkonfiguration gemäß A) für eine akustische und/oder visuelle Identifizierung möglich: Eine Türkommunikationskomponente 1 ist durch eine Audio-Datei und/oder Video-Datei und/oder Audio/Video-Datei, die in dieser Türkommunikationskomponente 1 gespeichert ist, bereits durch den Hersteller voridentifiziert. Die Vorkonfiguration einer solchen Türkommunikationskomponente 1 kann durch den Monteur/Installateur durch "unter Spannung setzten" der Türkommunikationskomponente 1 automatisch oder manuell in den Programmier/Aufnahmemodus versetzt werden, beispielsweise
- indem nur die Versorgungsspannung angelegt wird und die Türkommunikationskomponente 1 keine weitere Türkommunikationskomponente 1 erkennen/finden kann oder
- indem ein externes Datenmedium (beispielsweise eine Speicherkarte an die Türkommunikationskomponente 1 angeschlossen ist (siehe Datenmediumanschluss 15) oder
- durch manuelles Betätigen einer Taste oder Tastenkombination oder mittels Spracherkennung, usw.

Der Monteur/Installateur kann eine Türkommunikationskomponente 1 mit einer Audio-Datei und/oder Video-Datei und/oder Audio/Video-Datei seiner Wahl konfigurieren - siehe A) -, und zwar
- über ein externes Datenmedium wie beispielsweise eine SD-Karte oder einen USB-Stick (siehe Datenmediumanschluss 15) oder
- über eine Kabelverbindung wie beispielsweise RS232, USB, Firewire (siehe Datenmediumanschluss 15) oder
- über eine drahtlos Verbindung wie beispielsweise Infrarot, Bluetooth, WLAN (dies entspricht ebenfalls einem Datenmediumanschluss 15) oder
- mit einem Ton (Audiosignal, Sprache, Audio-Datei), der über das Mikrofon 6 aufgenommen wird oder
- mit einem Bild/Video (Video-Datei), das über die Kamera 8 aufgenommen wird oder
- mit einem Audio/Video (Kombination aus Bild und Ton, Audio/Video-Datei), das über Mikrofon 6 und Kamera 8 aufgenommen wird.

Eine eventuell bereits zuvor gespeicherte Audio-Datei und/oder Video-Datei und/oder Audio/Video-Datei wird in diesem Fall überschrieben. Die Aufnahme bzw. Audio-Datei und/oder Video-Datei und/oder Audio/Video-Datei dient als neue akustische und/oder visuelle Identifizierung der Türkommunikationskomponente 1. Dieses Überschreib-Verfahren kann beliebig wiederholt werden.

Für die Systemidentifikation gemäß B) wird das Türkommunikationssystem 19 zunächst in den Programmiermodus versetzt. Alle Türkommunikationskomponenten 1 des Türkommunikationssystems 19 können nun durch Aufzeichnung einer Sprach- und/oder Bild-Nachricht - d. h. Audio-Datei und/oder Video-Datei und/oder Audio/Video-Datei - akustisch und/oder visuell identifiziert werden. Die Reihenfolge der akustischen und/oder visuellen Identifizierung ist beliebig für jede Türkommunikationskomponente 1 des Türkommunikationssystems 19.

Nachstehend zur näheren Erläuterung der Systemidentifikation gemäß B) ein Beispiel für ein Drei-Wohnungsparteien-Wohnhaus:
- Zunächst wird beispielsweise die zweite (Ruf-) Taste der Türstation 1A länger gedrückt oder es wird ein Sprachbefehl für die Identifikation gegeben oder ein RFID-Tag wird der Türstation 1A genähert. Ein akustisches Signal über den Lautsprecher 5 signalisiert die Aufnahmebereitschaft für die zweite (Ruf-) Taste. Die Audio-Datei und/oder Video-Datei und/oder Audio/Video-Datei für die zweite (Ruf-) Taste wird über das Mikrofon 6 und/oder die Kamera 8 aufgezeichnet. Das Ende der Aufzeichnung wird durch ein akustisches Signal signalisiert.
- Alternativ oder zusätzlich kann die Aufnahmebereitschaft beispielsweise durch einen Leuchtring um die (Ruf-) Taste, die Namensschildbeleuchtung oder eine andere Lichtquelle visualisiert oder auf dem Display 9 angezeigt werden.
- Alternativ kann die Aufzeichnung gestartet und fortgeführt werden, solange die zweite (Ruf-) Taste gedrückt gehalten wird oder ein Näherungssensor der Türstation 1A den Monteur/Installateur erfasst.
- Der Vorgang kann für die erste und die dritte (Ruf-) Taste der Türstation 1A oder Wohnungsstation 1C/1D/1E oder Etagenstation in beliebiger Reihenfolge fortgesetzt werden, um alle Türkommunikationskomponenten 1 akustisch (und falls gewünscht bzw. möglich auch visuell) zu identifizieren. Dies ist jedoch kein notwendiger Vorgang. Sind mindestens eine (Ruf-) Taste der Türstation 1A und eine Wohnungsstation 1C/1D/1E akustisch und/oder visuell identifiziert, kann zusätzlich zur akustischen und/oder visuellen Identifikation ebenfalls die Zuordnung einer (Ruf-) Taste der Türstation 1A zu einer Wohnungsstation 1C/1D/1E erfolgen.
- Das wiederholte akustische und/oder visuelle Identifizieren einer bereits identifizierten Türkommunikationskomponente 1 ist ebenfalls möglich und wird durch wiederholte Anwendung des zuvor beschriebenen Vorgangs durchgeführt.
- Die akustische und/oder visuelle Identifizierung einer (Ruf-) Taste der Wohnungsstation 1C/1D/1E ist ebenfalls möglich. Dies gilt auch für die Zuordnung der (Ruf-) Taste einer Wohnungsstation 1C/1D/1E zu einer weiteren Wohnungsstation oder zur Türstation 1A. In einem solchen Fall können interne Rufe oder Kommunikationspfade aufgebaut werden.
- Bereits akustisch und/oder visuell identifizierte Türkommunikationskomponenten 1 können durch eine permanente Visualisierung als Leuchtring um die (Ruf-) Taste, die Namensschildbeleuchtung oder eine andere Lichtquelle visualisiert oder auf dem Display 9 kenntlich gemacht werden.

Die akustische und/oder visuelle Zuordnung einer (Ruf-) Taste der Türstation 1A zu einer Wohnungsstation 1C/1D/1E mittels der Audio-Dateien und/oder Video-Dateien und/oder Audio/Video-Dateien erfolgt anhand der bereits akustisch und/oder visuell identifizierten Türkommunikationskomponenten 1 des Türkommunikationssystems 19. Diese Funktion steht zur Verfügung, sobald mindestens eine (Ruf-) Taste der Türstation 1A und eine Wohnungsstation 1C/1D/1E akustisch und/oder visuell identifiziert worden sind. Die Reihenfolge der Zuordnung ist beliebig und hängt lediglich von den bereits akustisch und/oder visuell identifizierten Türkommunikationskomponenten 1 ab.

Nachstehend zur näheren Erläuterung der Zuordnung zwischen der Türstation 1A und einer Wohnungsstation 1C/1D/1E wiederum ein Beispiel für ein Drei-Wohnungsparteien-Wohnhaus:
- Es wird beispielsweise die dritte (Ruf-) Taste der Türstation 1A gedrückt oder ein Sprachbefehl für die Zuordnung gegeben oder ein RFID-Tag der Türstation 1A genähert. Über den Lautsprecher 5 werden die bereits vorgenommenen akustischen Identifikationen (und falls vorhanden über das Display 9 die visuellen Identifikationen) der Wohnungsstationen 1C/1D/1E nacheinander wiedergegeben. Eine Zuordnung von dritter (Ruf-) Taste der Türstation 1A und einer der Wohnungsstationen 1C oder 1D oder 1E erfolgt durch wiederholtes Drücken der dritten (Ruf-) Taste der Türstation 1A oder durch einen Sprachbefehl für das Zuordnen oder mittels Näherung eines RFID-Tags zur Türstation 1A in dem Moment der Wiedergabe, in welchem die akustische und/oder visuelle Identifikation der gewünschten Wohnungsstation 1C oder 1D oder 1E erfolgt.
- Alternativ kann die Zuordnung über die Wohnungsstation 1C oder 1D oder 1E erfolgen. Dazu wird beispielsweise die (Ruf-) Taste der ersten Wohnungsstation 1C betätigt. Über den Lautsprecher 5 werden die bereits vorgenommenen akustischen Identifikationen (und falls vorhanden über das Display 9 die visuellen Identifikationen) der ersten, zweiten, dritten (Ruf-) Taste der Türstation 1A nacheinander wiedergegeben. Eine Zuordnung von (Ruf-) Taste der Türstation 1A und Wohnungsstation 1C oder 1D oder 1E erfolgt durch wiederholtes Drücken der (Ruf-) Taste der Wohnungsstation 1C oder 1D oder 1E oder einen Sprachbefehl für das Zuordnen oder mittels Näherung mit eines RFID-Tags in dem Moment der Wiedergabe, in welchem die akustische Identifikation der gewünschten Wohnungsstation 1C oder 1D oder 1E erfolgt.
- Zusätzlich kann die erfolgreiche Zuordnung durch ein akustisches Signal signalisiert und/oder beispielsweise durch einen Leuchtring um die (Ruf-) Taste, die Namensschildbeleuchtung oder durch eine andere Lichtquelle oder durch das Display 9 visualisiert werden.
- Der Vorgang kann für die erste und zweite (Ruf-) Taste der Türstation 1A für die Zuordnung zu einer Wohnungsstation oder Etagenstation in beliebiger Reihenfolge fortgesetzt werden, um alle Türkommunikationskomponenten 1 zuzuordnen. Dies ist jedoch kein notwendiger Vorgang, da jederzeit zur akustischen und/oder visuellen Identifizierung übergegangen werden kann.
- Das wiederholte akustische und/oder visuelle Zuordnen von bereits zugeordneten Türkommunikationskomponenten 1 ist ebenfalls möglich und wird durch wiederholte Anwendung des zuvor beschriebenen Vorgangs durchgeführt.
- Bereits akustisch und/oder visuell identifizierte Türkommunikationskomponenten 1 können optional bei der Wiedergabe der Zuordnung ausgelassen werden, um eine einfache Zuordnung vorzunehmen. Die Wiedergabezeit wird dadurch verkürzt und noch nicht zugeordnete Türkommunikationskomponenten 1 werden sicher erkannt. Um Mehrfachzuordnungen vorzunehmen, kann der einfache Zuordnungsmodus jederzeit wieder verlassen werden.
- Das Löschen von bestehenden Zuordnungen wird durch erneute akustische und/oder visuelle Identifikation vorgenommen.

Diejenigen Türkommunikationskomponenten 1A/1C/1D/1E, die nicht über die Möglichkeit der Speicherung der akustischen und/oder visuellen Identifikation respektive Audio-Datei und/oder Video-Datei und/oder Audio/Video-Datei verfügen, können diese Daten auf einer Zentralstation 1B ablegen. Ein eindeutiger Schlüssel, beispielsweise als Checksumme der Audio-Datei und/oder Video-Datei und/oder Audio/Video-Datei, das Aufnahmedatum, die Seriennummer oder Netzwerknummer der Türkommunikationskomponente 1A/1C/1D/1E usw. dient dabei als Verweis auf die Daten in der Zentralstation 1B und wird stattdessen in der Türkommunikationskomponente 1A/1C/1D/1E platzsparend im Speicher 4 abgelegt.

Es sind Konfigurationen/Konfigurationsänderungen einer Türkommunikationskomponente 1 anhand der akustischen und/oder visuellen Identifikation möglich: Die weitergehende Konfiguration (über die Zuordnung hinaus) von Türkommunikationskomponenten 1 in einem Türkommunikationssystem 19 oder Teilsystem hiervon können von jeder beliebigen Türstation 1A, Wohnungsstation 1C/1D/1E oder Zentralstation 1B aus durchgeführt werden, indem die akustische und/oder visuelle Identifikation benutzt wird. Die zu konfigurierende Türkommunikationskomponente 1 wird anhand der akustischen und/oder visuellen Identifikation ausgewählt und nachfolgend werden weitergehende Konfigurationsdaten eingestellt, wie beispielsweise die Lautstärke, die Mikrofonempfindlichkeit, der Display-Kontrast, die Display-Hintergrundbeleuchtung, usw.

In den Figuren 3, 4 und 5 sind drei unterschiedliche Video-Dateien zur Identifikation unterschiedlicher Ruf-Tasten einer Türstation 1A beispielhaft dargestellt. Es handelt sich dabei um den Spezialfall, bei welchem die Video-Datei aus einer Bild-Datei gebildet wird, so dass auch von einer Bild-Identifikation gesprochen werden kann. Die gezeigte Bild-Identifikation für eine Türstation kann sowohl durch den Hersteller vorkonfiguriert werden als auch durch den Monteur/Installateur vor der Inbetriebnahme im ausgebauten Zustand erfolgen. Es sind jeweils ein oberes Namensschild 23 mit zugeordneter oberer Ruf-Taste 20, ein mittleres Namensschild 24 mit zugeordneter mittlerer Ruf-Taste 21 sowie ein unteres Namensschild 25 mit zugeordneter unterer Ruf-Taste 22 zu erkennen:
- Gemäß Fig. 3 ist das obere Namensschild 23 beleuchtet, während das mittlere Namensschild 24 und das untere Namensschild 25 jeweils unbeleuchtet sind. Dies entspricht einer ersten Video-Datei.
- Gemäß Fig. 4 ist das mittlere Namensschild 24 beleuchtet, während das obere Namensschild 23 und das untere Namensschild 25 jeweils unbeleuchtet sind. Dies entspricht einer zweiten Video-Datei.
- Gemäß Fig. 5 ist das untere Namensschild 25 beleuchtet, während das obere Namensschild 23 und das mittlere Namensschild 24 jeweils unbeleuchtet sind. Dies entspricht einer dritten Video-Datei.

Zusammenfassend ist festzuhalten, dass das vorgeschlagene Verfahren die akustische und/oder visuelle und/oder audio/visuelle "Ein-Personen-Inbetriebnahme" eines Türkommunikationssystems 19 ermöglicht. Die Türkommunikationskomponenten 1 des Türkommunikationssystems 19 werden mittels Ton (Audiosignal, Sprache, Audio-Datei usw.) und/oder Bild (Image, Film/Video, Bild- oder Video-Datei usw.) und/oder einer Kombination aus Ton und Bild (Audio/Video-Datei) vor oder während der Inbetriebnahme identifiziert. Die Programmierung/Zuordnung des Türkommunikationssystems 19 erfolgt effizient von einer Person auf Basis der akustischen/visuellen Türkommunikationskomponenten-Identifikation, wie beispielsweise die Einstellung von System- und Komponentenparametern, die Zuordnung von bestimmten (Ruf-) Tasten der Türstation 1A zu bestimmten Wohnungsstationen 1C/1D/1E, usw.

Nachfolgend einige konkrete Beispiele für Audio-Dateien, Video-Dateien und Audio/Video-Datei:
A) Audio-Datei: Die zweite Ruf-Taste einer Türstation kann beispielsweise mit einem der folgen Audiosignale gekennzeichnet werden: "Ruf-Taste Zwei Türstation" oder "Familie Meier" oder "A. Weber" oder "Kanzlei Müller" usw. Die Etagenruftaste im ersten Obergeschoß kann beispielsweise mit einem der folgen Audiosignale gekennzeichnet werden: "Etagentaster Meier" oder "Erstes Obergeschoß Flur links". Eine Wohnungsstation kann beispielsweise mit einem der folgen Audiosignale gekennzeichnet werden: "Wohnungsstation Nummer Acht" oder "Wohnung Meier" usw. Die Audio-Formate sind beliebig, wie beispielsweise WAV, MP3 (MPEG-1 Layer III), MP3Pro, MPEG-4, HE-AAC, RIFF WAVE, FLAC, WMA usw.
B) Video-Datei (inklusiv Bild-Datei): Die Bild- oder Videoformate sind beliebig, wie beispielsweise GIF, TIFF, BMP, PNG usw. oder MPEG-1, MPEG-2, MPEG-4. DivX, Windows Media (WMA), Qicktime usw.
C) Beliebige Kombinationen aus Audio-Datei gemäß A) und Video-Datei gemäß B), wobei auch Abläufe zum Auffinden der Station hinterlegt werden können, wie beispielsweise: Video startet am Eingang des Gebäudes. Der Weg zur Wohnung 13 wird gefilmt und mit Weghinweisen unterlegt.

Vorstehend ist zur vereinfachten Erläuterung stets davon die Rede, dass zur Identifikation einer Türkommunikationskomponente wie Türstation oder Wohnungsstationen dieser Komponente eine bestimmte Audio-Datei und/oder Video-Datei und/oder Audio/Video-Datei zugeordnet wird. Dabei kann es sich unter einer bestimmten "Türkommunikationskomponente" auch um Einzelkomponenten, wie bestimmte Bedienelemente 7 einer Türstation oder Wohnungsstation, wie Ruf- oder Türöffner-Tasten handeln, denen in gleicher Art und Weise wie einer kompletten Komponente eine bestimmte Audio-Datei und/oder Video-Datei und/oder Audio/Video-Datei zugeordnet wird. Mit anderen Worten kann demnach jeder einzelne Taster durch eine ihm zugeordnete bestimmte Audio-Datei und/oder Video-Datei und/oder Audio/Video-Datei identifiziert werden.

Des Weiteren ist in den vorstehenden Erläuterungen die Rede davon, dass einer Türkommunikationskomponente oder einem Bedienelement eine bestimmte Audio-Datei und/oder Video-Datei und/oder Audio/Video-Datei zugeordnet wird, diese abgespeichert wird und dann zur Zuordnung verwendet wird. Eine Verallgemeinerung dieses Lösungsvorschlages ist darin gegeben, dass eine allgemeine Identifikation einer Türkommunikationskomponente respektive eines Bedienelementes einer Türkommunikationskomponente durch Zuordnung einer bestimmten Audio-Datei und/oder Video-Datei und/oder Audio/Video-Datei erfolgt und nicht - wie allgemein bekannt - über eine IP-Adresse oder Seriennummer oder durch DIP-Schalter-Codieren. Mit anderen Worten spielt die Zuordnung zwischen unterschiedlichen Komponenten bei dieser verallgemeinernden Betrachtungsweise überhaupt keine Rolle, von Wichtigkeit ist vielmehr die individuelle Identifizierung jeder einzelnen Komponente mittels einer bestimmten Audio-Datei und/oder Video-Datei und/oder Audio/Video-Datei.

### Bezugszeichenliste

- 1: Türkommunikationskomponente eines Türkommunikationssystems 19, beispielsweise 1A = Türstation, 1B = Zentralstation, 1C, 1D, 1E = Wohnungs- und/oder Etagenstationen
- 2: Steuerlogik/Busanbindung
- 3: Netzteil
- 4: Speicher
- 5: Lautsprecher
- 6: Mikrofon
- 7: Bedienelemente: Ruf-Taste, Licht-, Türöffner-, Sprach-, Einstell-Taste, Touch, biometrische Erkennung, RFID-Erkennung
- 8: Kamera
- 9: Display
- 10: Sprach-/Bild-Erkennung
- 11: ---
- 12: Netzwerk / Bussystem
- 13: Spannungsversorgungsleitung zum Netzwerk / Bussystem 12
- 14: analoge und/oder digitale Steuer- und Datenübertragung zum/vom Netzwerk / Bussystem 12
- 15: Datenmediumanschluss
- 16: Spannungsversorgungsleitung
- 17: Drahtlosverbindung mit Sende- und Empfangseinheit
- 18: ---
- 19: Türkommunikationssystem
- 20: obere Ruf-Taste
- 21: mittlere Ruf-Taste
- 22: untere Ruftaste
- 23: oberes Namensschild
- 24: mittleres Namensschild
- 25: unteres Namensschild

## Patentansprüche

1. Verfahren zur Inbetriebnahme eines Türkommunikationssystems (19), welches mehrere Türkommunikationskomponenten (1), wie Türstation (1A) und Wohnungsstationen (1C, 1D, 1E) respektive Bedienelemente (7) einer Türstation oder Wohnungsstation, wie Ruf-oder Türöffner-Tasten aufweist, die über ein Netzwerk / Bussystem (12) miteinander verbunden sind, **dadurch gekennzeichnet, dass** zur Identifikation einer bestimmten Türkommunikationskomponente (1) oder eines bestimmten Bedienelements (7) dieser Komponente oder diesem Bedienelement im Programmiermodus eine bestimmte Audio-Datei und/oder Video-Datei und/oder Audio/Video-Datei zugeordnet wird, und dass diese bestimmte Audio-Datei und/oder Video-Datei und/oder Audio/Video-Datei abgespeichert wird, wobei die Türkommunikationskomponenten (1) des Türkommunikationssystems (19) nach Aufzeichnung der Audio-Datei und/oder Video-Datei und/oder Audio/Video-Datei akustisch und/oder visuell identifiziert werden und eine akustische und/oder visuelle Zuordnung eines Bedienelements (7) mittels der Audio-Dateien und/oder Video-Dateien und/oder Audio/Video-Dateien anhand der bereits akustisch und/oder visuell identifizierten Türkommunikationskomponenten (1) durchgeführt wird.

2. Verfahren nach Anspruch 1, **dadurch gekennzeichnet, dass** die Zuordnung von Türkommunikationskomponenten (11) untereinander auf der Basis dieser abgespeicherten Audio-Dateien und/oder Video-Dateien erfolgt.

3. Verfahren nach Anspruch 1, **dadurch gekennzeichnet, dass** die Abspeicherung einer einer bestimmten Türkommunikationskomponente (1) oder eines bestimmten Bedienelementes (7) zugeordneten Audio-Datei und/oder Video-Datei und/oder Audio/Video-Datei in einem Speicher (4) dieser Komponente selbst erfolgt.

4. Verfahren nach Anspruch 1, **dadurch gekennzeichnet, dass** die Abspeicherung einer einer bestimmten Türkommunikationskomponente (1) oder eines bestimmten Bedienelementes (7) zugeordneten Audio-Datei und/oder Video-Datei und/oder Audio/Video-Datei im Speicher (4) einer Zentralstation (1B) erfolgt, während im Speicher (4) einer bestimmten Türkommunikationskomponente (1) lediglich ein Verweis auf diese Datei abgespeichert wird.

5. Verfahren nach einem der vorstehenden Ansprüche, **dadurch gekennzeichnet, dass** die Zuführung einer Audio-Datei und/oder Video-Datei und/oder Audio/Video-Datei über einen Datenmediumanschluss (15) einer Türkommunikationskomponente (1) erfolgt.

6. Verfahren nach einem der vorstehenden Ansprüche, **dadurch gekennzeichnet, dass** bereits herstellerseitig eine Vorkonfiguration/Voridentifikation einer Türkommunikationskomponente (1) oder eines bestimmten Bedienelementes (7) durch Abspeicherung einer Audio-Datei und/oder Video-Datei und/oder Audio/Video-Datei erfolgt.

7. Verfahren nach einem der vorstehenden Ansprüche, **dadurch gekennzeichnet, dass** eine Vorkonfiguration/Voridentifikation einer Türkommunikationskomponente (1) oder eines bestimmten Bedienelementes (7) durch Abspeicherung einer Audio-Datei oder einer Audio/Video-Datei unter Einsatz eines Mikrofons (6) dieser Türkommunikationskomponente (1) erfolgt.

8. Verfahren nach einem der vorstehenden Ansprüche, **dadurch gekennzeichnet, dass** eine Vorkonfiguration/Voridentifikation einer Türkommunikationskomponente (1) oder eines bestimmten Bedienelementes (7) durch Abspeicherung einer Video-Datei oder einer Audio/Video-Datei unter Einsatz einer Kamera (8) dieser Türkommunikationskomponente (1) erfolgt.

9. Verfahren nach einem der vorstehenden Ansprüche, **dadurch gekennzeichnet, dass** das Türkommunikationssystem (19) für eine Systemidentifikation zunächst in einen Programmiermodus versetzt wird, worauf in einer Türkommunikationskomponente (1) Aufzeichnungen von Audio-Dateien und/oder Video-Dateien und/oder Audio/Video-Dateien unter Einsatz eines Mikrofons (6) und/ oder einer Kamera (8) dieser Türkommunikationskomponente (1) erfolgen.

10. Verfahren nach einem der vorstehenden Ansprüche, **dadurch gekennzeichnet, dass** eine akustische und/oder visuelle Zuordnung zwischen Tasten einer Türstation (1A) und bestimmten Wohnungsstationen (1C, 1D, 1E) auf Grundlage von Audio-Dateien und/oder Video-Dateien und/oder Audio/Video-Dateien der identifizierten Türkommunikationskomponente (1) oder eines bestimmten Bedienelementes (7) erfolgt.

11. Verfahren nach einem der vorstehenden Ansprüche, **dadurch gekennzeichnet, dass** die Konfiguration/Konfigurationsänderung einer Türkommunikationskomponente (1), wie Lautstärke-Einstellung, Mikrofonempfindlichkeil-Einstellung, Display-Kontrast-Einstellung, an Hand der akustischen und/oder visuellen Identifikation erfolgt.

12. Verfahren nach einem der vorstehenden Ansprüche, **dadurch gekennzeichnet, dass** das akustische und/oder visuelle Identifizieren und/oder Zuordnen einer bereits identifizierten / zugeordneten Türkommunikationskomponente (1) durch wiederholte Anwendung erfolgt.

## Claims

1. Method for starting up a door communication system (19)that has multiple door communication components (1), such as a door station (1A) and apartment stations (1C, 1D, 1E), or operator control elements (7) of a door station or apartment station, such as call or door-opener keys, that are connected to one other via a network/bus system (12), **characterized in that** a particular door communication component (1) or a particular operator control element (7) is identified by virtue of this component or this operator control element being assigned a particular audio file and/or video file and/or audio/video file in the programing mode, and **in that** this particular audio file and/or video file and/or audio/video file is stored, wherein the door communication components (1) of the door communication system (19) are identified audibly and/or visually after recording of the audio file and/or video file and/or audio/video file and audible and/or visual assignment of an operator control element (7) by means of the audio files and/or video files and/or audio/video files is performed on the basis of the door communication components (1) already identified audibly and/or visually.

2. Method according to Claim 1, **characterized in that** the assignment of door communication components (11) among one another is effected on the basis of these stored audio files and/or video files.

3. Method according to Claim 1, **characterized in that** the storage of an audio file and/or video file and/or audio/video file assigned to a particular door communication component (1) or a particular operator control element (7) is effected in a memory (4) of this component itself.

4. Method according to Claim 1, **characterized in that** the storage of an audio file and/or video file and/or audio/video file assigned to a particular door communication component (1) or a particular operator control element (7) is effected in the memory (4) of a central station (1B), while the memory (4) of a particular door communication component (1) is used to store only a reference to this file.

5. Method according to one of the preceding claims, **characterized in that** the supply of an audio file and/or video file and/or audio/video file is effected via a data medium connection (15) of a door communication component (1).

6. Method according to one of the preceding claims, **characterized in that** the manufacturer itself effects preconfiguration/preidentification of a door communication component (1) or a particular operator control element (7) by storing an audio file and/or video file and/or audio/video file.

7. Method according one of the preceding claims, **characterized in that** preconfiguration/- preidentification of a door communication component (1) or a particular operator control element (7) is effected by storing an audio file or an audio/video file using a microphone (6) of this door communication component (1).

8. Method according to one of the preceding claims, **characterized in that** preconfiguration/- preidentification of a door communication component (1) or a particular operator control element (7) is effected by storing a video file or an audio/video file using a camera (8) of this door communication component (1).

9. Method according to one of the preceding claims, **characterized in that** the door communication system (19) is initially put into a programing mode for system identification, whereupon recordings of audio files and/or video files and/or audio/video files in a door communication component (1) are effected using a microphone (6) and/or a camera (8) of this door communication component (1).

10. Method according to one of the preceding claims, **characterized in that** audible and/or visual assignment between keys of a door station (1A) and particular apartment stations (1C, 1D, 1E) is effected on the basis of audio files and/or video files and/or audio/video files of the identified door communication component (1) or a particular operator control element (7).

11. Method according to one of the preceding claims, **characterized in that** the configuration/change of configuration of a door communication component (1), such as volume setting, microphone sensitivity setting, display contrast setting, is effected on the basis of the audible and/or visual identification.

12. Method according to one of the preceding claims, **characterized in that** the audible and/or visual identifying and/or assigning of an already identified/assigned door communication component (1) is effected by repeated application.

## Revendications

1. Procédé de mise en fonctionnement d'un système de communication de porte (19), qui comporte plusieurs composants de communication de porte (1), tels qu'une station de porte (1A) et des stations d'appartement (1C, 1D, 1E), des éléments de commande respectifs (7) d'une station de porte ou d'une station d'appartement, tels que des touches d'appel ou d'ouverture de porte, qui sont reliés entre eux par un réseau ou un système de bus (12), **caractérisé en ce que**, pour permettre l'identification d'un composant de communication de porte (1) déterminé ou d'un élément de commande (7) déterminé, un fichier audio et/ou un fichier vidéo et/ou un fichier audio/vidéo déterminé(s) est/sont associé (s) dans un mode de programmation audit composant ou audit élément de commande, et **en ce que** ledit fichier audio et/ou ledit fichier vidéo et/ou ledit fichier audio/vidéo déterminé(s) est/sont mémorisé(s), dans lequel les composants de communication de porte (1) du système de communication de porte (19) sont identifiés acoustiquement et/ou visuellement après enregistrement du fichier audio et/ou du fichier vidéo et/ou du fichier audio/vidéo et une association acoustique et/ou visuelle d'un élément de commande (7) est effectuée au moyen des fichiers audio et/ou des fichiers vidéo et/ou des fichiers audio/vidéo sur la base des composants de communication de porte (1) déjà identifiés acoustiquement et/ou visuellement.

2. Procédé selon la revendication 1, **caractérisé en ce que** l'association de composants de station de communication de porte (11) entre eux est effectuée sur la base desdits fichiers audio et/ou desdits fichiers audio et/ou desdits fichiers vidéo mémorisés.

3. Procédé selon la revendication 1, **caractérisé en ce que** la mémorisation d'un fichier audio et/ou d'un fichier vidéo et/ou d'un fichier audio/vidéo associé à un composant de communication de porte (1) déterminé ou à un élément de commande (7) déterminé est effectuée dans une mémoire (4) dudit composant lui-même.

4. Procédé selon la revendication 1, **caractérisé en ce que** la mémorisation d'un fichier audio et/ou d'un fichier vidéo et/ou d'un fichier audio/vidéo associé à un composant de communication de porte (1) déterminé ou à un élément de commande (7) déterminé est effectuée dans une mémoire (4) d'une station centrale (1B) alors que seule une référence audit fichier est mémorisée dans la mémoire (4) d'un composant de communication de porte (1) déterminé.

5. Procédé selon l'une quelconque des revendications précédentes, **caractérisé en ce que** la fourniture d'un fichier audio et/ou d'un fichier vidéo et/ou d'un fichier audio/vidéo est effectuée par l'intermédiaire d'une borne de support de données (15) d'un composant de communication de porte (1).

6. Procédé selon l'une quelconque des revendications précédentes, **caractérisé en ce qu'**une pré-configuration/pré-identification d'un composant de communication de porte (1) ou d'un élément de commande (7) déterminé est déjà effectuée côté fabricant par mémorisation d'un fichier audio et/ou d'un fichier vidéo, et/ou d'un fichier audio/vidéo.

7. Procédé selon l'une quelconque des revendications précédentes, **caractérisé en ce qu'**une pré-configuration/pré-identification d'un composant de communication de porte (1) ou d'un élément de commande (7) déterminé est effectuée par stockage d'un fichier audio ou d'un fichier audio/vidéo par mise en oeuvre d'un microphone (6) dudit composant de communication de porte (1).

8. Procédé selon l'une quelconque des revendications précédentes, **caractérisé en ce qu'**une pré-configuration/pré-identification d'un composant de communication de porte (1) ou d'un élément de commande (7) déterminé est effectuée par mémorisation d'un fichier vidéo ou d'un fichier audio/vidéo par mise en oeuvre d'une caméra (8) dudit composant de communication de porte (1).

9. Procédé selon l'une quelconque des revendications précédentes, **caractérisé en ce que** le système de communication de porte (19) est tout d'abord mis dans un mode de programmation pour une identification du système, lors de quoi des enregistrements de fichiers audio et/ou de fichiers vidéo et/ou de fichier audio/vidéo sont effectués dans un composant de communication de porte (1) par mise en oeuvre d'un microphone (6) et/ou d'une caméra (8) dudit composant de communication de porte (1).

10. Procédé selon l'une quelconque des revendications précédentes, **caractérisé en ce qu'**une association acoustique et/ou visuelle entre des touches d'une station de porte (1A) et des stations d'appartement (1C, 1D, 1E) déterminées est effectuée sur la base de fichiers audio et/ou de fichiers vidéo et/ou de fichiers audio/vidéo du composant de communication de porte (1) identifié ou d'un élément de commande (7) déterminé.

11. Procédé selon l'une quelconque des revendications précédentes, **caractérisé en ce que** la configuration/la modification de configuration d'un composant de communication de porte (1), comme un réglage de haut-parleur, un réglage de sensibilité du microphone, un réglage de contraste de l'afficheur, est effectuée sur la base de l'identification acoustique et/ou visuelle.

12. Procédé selon l'une quelconque des revendications précédentes, **caractérisé en ce que** l'identification et/ou l'association acoustique et/ou visuelle d'un composant de communication de porte (1) déjà identifié/associé est effectuée par une application répétée.
